# EUROPEAN PATENT APPLICATION

(11) **EP 4 481 968 A1**
(43) Date of publication of application: **25.12.2024**
(21) Application number: 23180978.1
(22) Date of filing: 22.06.2023
(51) Int. Cl.: H02G 9/12, H02G 1/10, H02G 3/04, E02B 17/00

(54) **CABLE CONNECTOR SYSTEM FOR A FLOATING MARINE PLATFORM**

(71) Applicant: Ocergy, Inc., Oakland, CA 94607 (US)
(72) Inventor: CERMELLI, Christian André, OAKLAND, 94607 (US); URRUCHI DEL BARRIO, Alvaro, OAKLAND, 94607 (US)
(74) Representative: Geurts, Franciscus Antonius

(57) **Abstract**

The invention relates to a cable connector system for connecting an electric power cable in a cable connector channel that debouches at a bottom of a floating marine platform, wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable.

## Description

### BACKGROUND

The invention relates to a cable connector system for connecting an electric power cable in a cable connector channel of a floating marine platform. A floating marine platform can be used to support a wind turbine. The cable connector channel usually debouches at a bottom of the floating marine platform to be inserted therein under water. The electric power cable connects the wind turbine with an offshore electrical grid.

### SUMMARY OF THE INVENTION

A known cable connector system has an insert connector for insertion into the cable connector channel, and a bend stiffener pending downward from the insert connector. The electric power cable is fed through and attached to the cable connector system before it is installed under the floating marine platform. The insert connector locks under water inside the cable connector channel by means of multiple latches. The electric power cable is fed through a top support at the upper end of the cable channel and terminated or stripped off to expose its electrical conductors. During the service life of the floating marine platform the latches can fail, and they can only be released by means of a costly working class underwater remotely operated vehicle (ROV). In practice the insert connector can only be removed in a destructive way. When during the service life of the floating marine platform the electric power cable needs to be temporarily disconnected, it is cut off under the top support whereby some length of the electrical power cable is lost. Therefore the electrical power cable is initially commissioned with some overlength, and when it is reconnected after the temporary disconnection, it must be re-terminated and the cable configuration below the floating marine platform must be re-adjusted, which is a costly marine operation.

It is an object of the present invention to provide a cable connector system for connecting an electric power cable in a cable connector channel of a floating marine platform, wherein the electrical power cable can be connected to and disconnected from the floating marine platform in a reversible manner.

According to a first aspect, the invention provides a cable connector system for connecting an electric power cable in a cable connector channel that debouches at a bottom of a floating marine platform, wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable.

The cable connector system according to the invention comprises a cable hang-off to be fixated to the electric power cable, and an insert connector to be suspended from the cable hang-off by means of the pulling ropes. Therefore there is no need for latches or other provisions under water to keep the insert connector inserted in the cable channel. The electric power cable can be disconnected from the floating marine platform by lowering the cable hang-off to which is it fixated. The distal end is protected by the cable protector on the cable hang-off. The entire cable can sink to the sea floor and be picked up without damage, whereby its entire length can be reused instead of being cut-off. In this manner the electrical power cable can be connected to and disconnected from the floating marine platform in a reversible manner, possibly without intervention of a costly working class underwater remotely operated vehicle or adjustment of the cable configuration below the platform.

In an embodiment the pulling ropes extend parallel to each other.

In an embodiment the pulling ropes are evenly distributed around the cable passage section they define.

In an embodiment the insert connector comprises an insert plug for insertion into the cable connector channel.

In an embodiment thereof the insert connector comprises a radially projecting flange with a larger radial size than an insert opening towards the cable connector channel. The projecting flange may prevent that the insert connector is inserted too deep in the insert channel at the bottom of the floating marine platform during the installation of the cable connector system.

In an embodiment the insert plug has a distal end with a distal outer diameter, and a proximal end with a larger proximal outer diameter. When the cable connector channel has corresponding different diameters at the respective position of the distal end and the position of the proximal end, the proximal end an the distal end of the insert plug engages the insert channel substantially synchronous only at a final stage of the insertion, which facilitates a proper insertion of the insert plug.

In an embodiment the cable connector system comprises a bend restrictor between the cable hang-off and the insert connector that defines a cable passage section of the internal cable passage.

In an embodiment thereof the bend restrictor comprises a series of interconnected bend restrictor links that are provided with pulling rope channels through which the pulling ropes extend. The pulling ropes may keep the bend restrictor links aligned before the electric power cable is inserted in the internal cable passage.

In an embodiment thereof the bend restrictor links comprise a female part that merges into a male part and that extend in the female part of a subsequent bend restrictor link.

In an embodiment thereof the female part comprises an inner insert channel and the male part comprises a radially extending rim that is confined in the insert channel with play in the direction of the internal cable passage.

In an embodiment the cable connector system comprises a bend stiffener that is connected to the insert connector and that defines a cable passage section of the internal cable passage.

In an embodiment thereof the cable passage section of the bend stiffener is under an orientation angle with the cable passage section of the insert connector.

In an embodiment thereof the bend stiffener is connected to the insert connector via a spool piece that sets the orientation angle.

In an embodiment the cable protector is removable mounted to the cable hang-off to expose the distal end of the electric power cable after the cable hang-off is fixated with respect the cable connector channel. The cable protector can be reinstalled when the electric power cable is disconnected from the floating marine platform.

In an embodiment the cable protector comprises a protection tube for confinement of an end of the electric power cable, and a distal hoist coupling on the protection tube for hoisting the cable connector system. The entire assembly of the electric power cable and the cable connector system can be hoisted into the cable connector system at the distal hoist coupling, for example by means of a hoisting cable that is lowered through the cable connector channel.

In an embodiment the cable hang-off comprises a fixation bush that bounds a cable passage section of the internal cable passage, and a radially open insert slot for insertion of a hang-off lock.

In an embodiment the cable connector system comprises a guide that is removable mounted around the connection between of the cable hang-off and the cable protector.

According to a second aspect, the invention provides a set comprising a floating marine platform and a cable connector system according to the first aspect of the invention, wherein the floating marine platform comprises at least one column that comprises a circumferential wall, a bottom wall and a cable connector channel that extends through the column and that debouches through the bottom wall, wherein the cable connector system has an installed state in which the insert connector is inserted in the cable connector channel and is suspended from the cable hang-off via the pulling cables that extend through the cable connector channel, and an unconnected state in which the cable connector system is outside the cable connector channel.

In an embodiment thereof the insert connector comprises an insert plug for insertion into the cable connector channel, and a distal elastic body and a proximal elastic body that extend spaced apart from each other around the insert plug, wherein in the installed state the distal elastic body and the proximal elastic body are impressed and in contact with an inner surface of the cable connector channel.

According to an embodiment the floating marine platform comprises a central column, multiple peripheral columns circumferentially around the central column, radially extending outriggers that connect the peripheral columns with the central column, and tendons spanning between each adjacent pair of peripheral columns.

According to a third aspect, the invention provides a method for connecting an electric power cable to a floating marine platform by means of a cable connector system, wherein the floating marine platform comprises a cable connector channel that debouches at the bottom of the floating marine platform, and wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable, wherein the method comprises the step of inserting the electric power cable in the internal cable passage and fixating the inserted electric power cable with respect to the cable hang-off, the step of hoisting the cable connector system into the cable connector channel from below the bottom of the floating marine platform by means of a hoisting cable on the cable protector that extends through the cable connector channel, wherein the insert connector remains suspended on the pulling ropes after the insert connector has reached its final inserted position.

According to a fourth aspect, the invention provides a method for disconnecting an electric power cable on a floating marine platform by means of a cable connector system, wherein the floating marine platform comprises a cable connector channel that debouches at the bottom of the floating marine platform, and wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable, wherein the method comprises the step of placing the cable protector on the cable hang-off, and the step of lowering the cable connector system out off the cable connector channel by means of a hoisting cable on the cable protector that extends through the cable connector channel.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 is an isometric view of a floating marine platform that supports a wind turbine and that is connected to an offshore electric power cable by means of a cable connector system according to the invention ;
Figure 2 is an isometric view of only the relevant parts of the floating marine platform of figure 1;
Figures 3A and 3B are an isometric view and a partial longitudinal section of a central column of the floating marine platform of figure 2 in which the cable connector system is inserted;

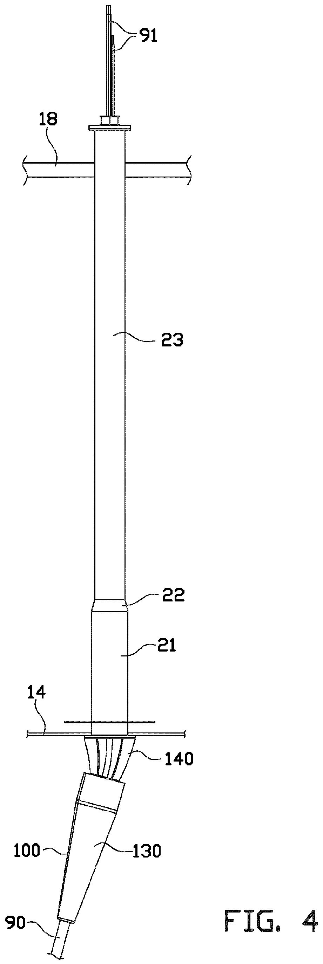

Figure 4 is a further detail of the central column and the cable connector system of figures 3A and 3B.
Figure 5 is a side view of the cable connector system during the installation to the floating marine platform of figure 1; and
Figures 6A-6D show details of the cable connector system as shown in figure 5.

### DETAILED DESCRIPTION OF THE INVENTION

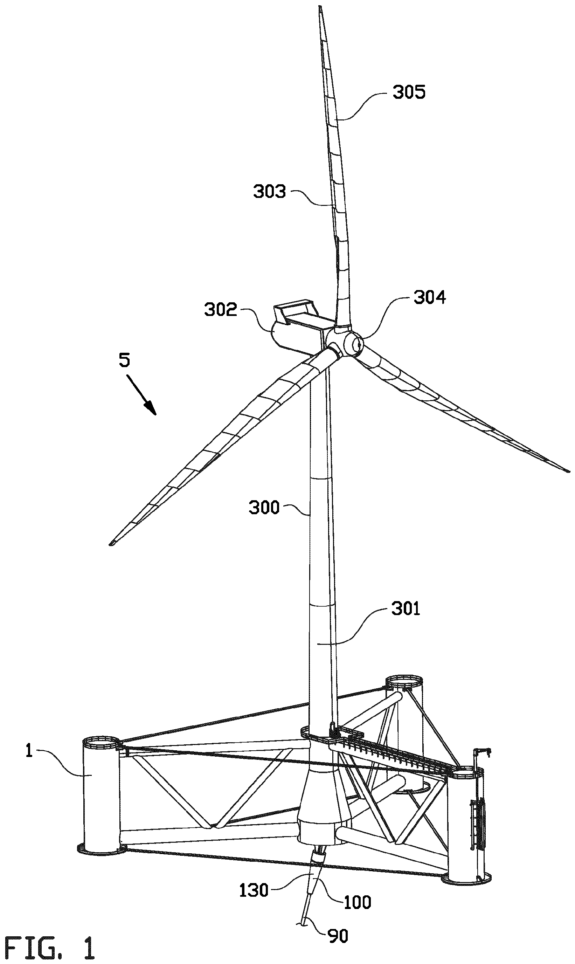

Figure 1 shows a floating marine platform 1 that supports in this example a wind turbine 300 to form a floating wind turbine 5. The wind turbine 300 has a vertical tower 301, a nacelle 302 and a rotor 303. The rotor 303 has a hub 304 that is connected to a generator inside the nacelle 302. The wind turbine 300 has in this example three blades 305 radiating from the hub 304. The wind turbine 300 is capable of producing more than 1 MW of electrical power, currently reaching about 10 to 15 MW. The bottom diameter of the tower 301 may be between 5 meter and 10 meter for a +10 MW wind turbine. The three blades 305 may be more than 100 meters long each. An example is the 12 MW Haliade X turbine from General Electrics. Other turbine designs, such as vertical axis wind turbines can also be supported by the floating marine platform 1. The wind turbine 300 is connected to an offshore electrical grid by means of an electric power cable 90 that is mounted to the floating marine platform 1 by means of a cable connector system 100 according to the invention.

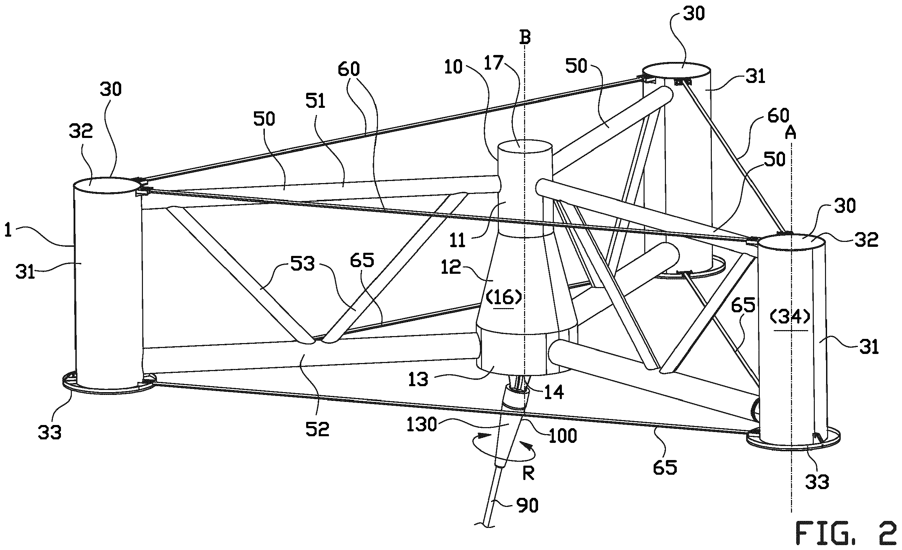

Figure 2 shows the floating marine platform 1 without the wind turbine 300 and without gangways, railings and mounted utilities to illustrate the structural parts thereof.

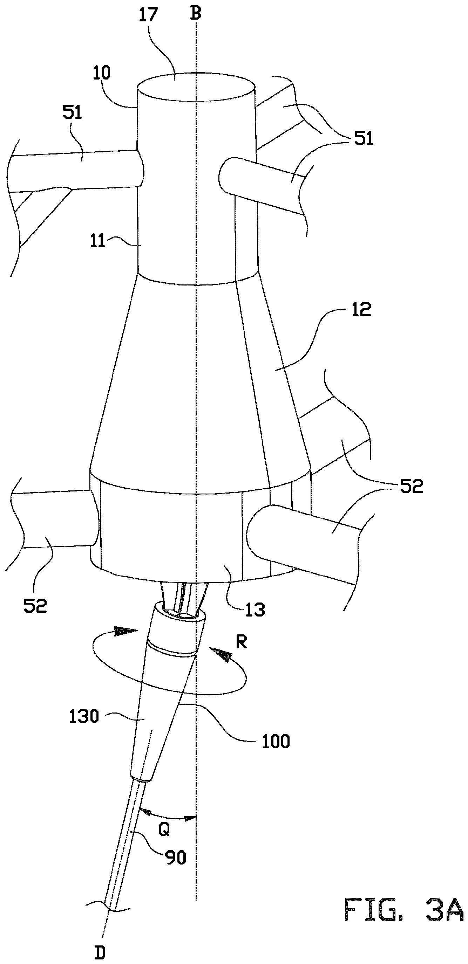

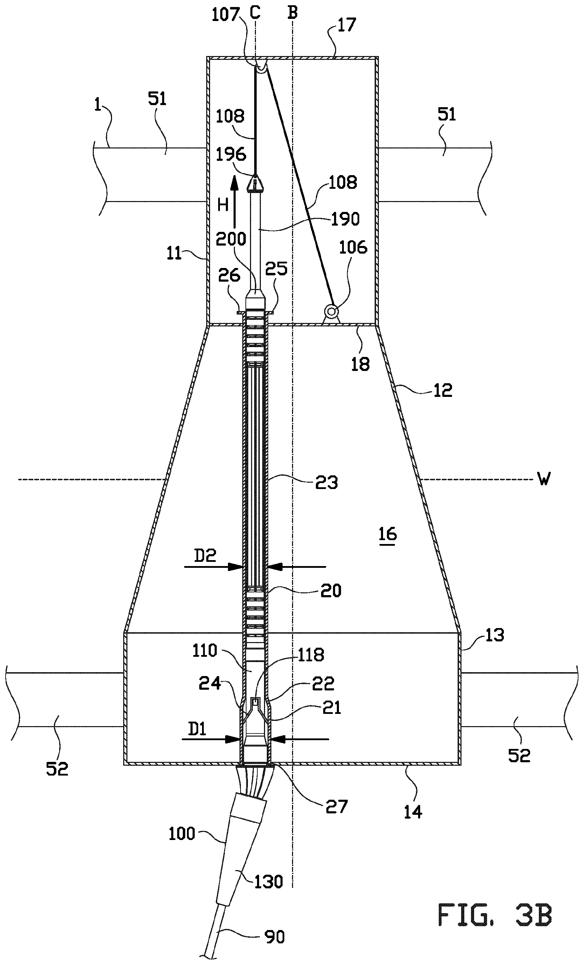

As shown in figures 2, 3A and 3B, the floating marine platform 1 comprises a central column 10 with a central axis B that is made of steel. The central column 10 has a vertical cylindrical upper circumferential wall section 11 that is closed off with a top wall 17 and that in this embodiment merges downwardly via a flared wall section or conically widening middle circumferential wall section 12 into a vertical cylindrical lower circumferential wall section 13 that is at the bottom closed off with a bottom wall 14 to define an internal chamber 16. The central column 10 has at the upper circumferential wall section 11 a diameter that is approximately equal to the bottom diameter of the tower 301, and that increases in diameter towards the bottom or keel of the central column 10 via the conically widening middle circumferential wall section 12. The central column 10 may be provided with a non-shown footing below the base wall section 13 with a larger diameter that provides additional volume. When the footing is filled with air, it helps to support the weight of the wind turbine 300. When the footing is filled with water, it helps to provide stability to the floating wind turbine 5. Alternatively the central column 10 has a vertical cylindrical wall having a constant diameter over its entire height, wherein the constant diameter is preferably approximately equal to the bottom diameter of the tower 301.

As shown in figure 2, the floating marine platform 1 comprises in this example three vertical cylindrical stabilizing or peripheral columns 30 with a central axis A that are made of steel. The peripheral columns 30 are disposed radially every 120 degrees around the central column 10 and extend with the central axes A parallel to the central axis B of the central column 10. The peripheral columns 30 each comprise a vertical cylindrical circumferential wall 31 that is at the upper side closed off with a top wall 32 to form an internal chamber 34. The peripheral columns 30 comprise a watertight flat inside the internal chamber 34 just below the mean water line W, and as from the watertight flat the internal chamber 34 is open to the sea. The peripheral columns 30 comprise a skirt 33 around the bottom edge of the circumferential wall 31.

The floating marine platform 1 comprises three outriggers 50 that extend radially between the central column 10 and the peripheral columns 30. The outriggers 50 are made of steel and are composed with an upper tubular member 51 and a lower tubular member 52 that extend in this example parallel to each other and that are interconnected with diagonal braces 53. Alternatively at least one of the upper tubular member 51 and the lower tubular member 52 may be diagonal to the other. Alternatively, the upper tubular member 51 and the lower tubular member 52 are solitary parts that are not interconnected with braces.

The floating marine platform 1 comprises three pre-tensioned slender upper structural members or tendons 60 having the same length that interconnect the upper ends of the peripheral columns 30, and three pre-tensioned slender lower structural members or tendons 65 having the same length that interconnect the lower ends of the peripheral columns 30 at the skirts 33.

The central column 10 has a bottom diameter of up to 20 meters. The central column 10 and the peripheral columns 30 typically have a total height of 20-30 meters, in this example about 24 meters. The peripheral columns 30 have a diameter between 6-12 meters. The tendons 60, 65 each have a length of 60-90 meters.

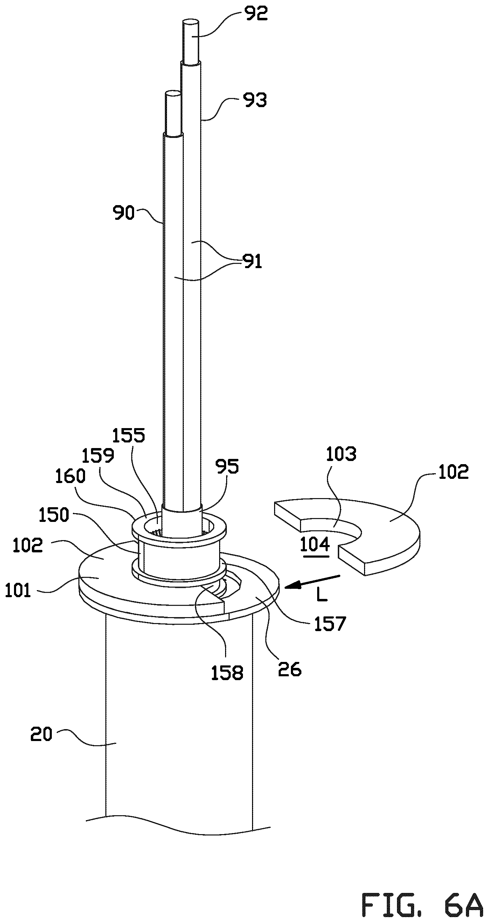

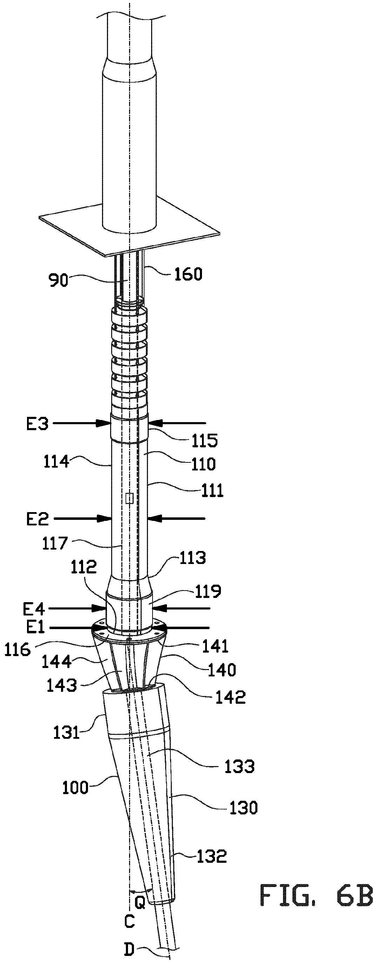

As shown in figure 3B, the central column 10 comprises a middle platform 18 that extends parallel to the top wall 17 and the bottom wall 14. In this example the middle platform 18 is connected to the merger of the upper circumferential wall section 11 and the middle circumferential wall section 12. The central column 10 comprises in this example one internal cable connector channel 20 with a circular cross section and a central axis C that extends offset and parallel to the center line B of the central column 10. The cable connector channel 20 is in this example formed with a steel insert tube 21 with a first inner diameter D1 that debouches via a bottom opening 27 through the bottom wall 14 into the sea. The insert tube 21 merges via a steel conical diameter reduction 22 in a longer steel riser tube 23 with a smaller second inner diameter D2 that extends through the main water line W. The riser tube 23 passes through and is welded to the middle platform 18 and debouches via a top opening 25 above the main water line W at a height at which it is ensured that sea water remains inside the cable connector channel 20 even when it temporary rises above the main water line W, for example due to wave impacts. The riser tube 23 merges into a mounting flange 26 that extends around the top opening 25. The cable connector system 100 comprises a hang-off lock 101 on the mounting flange 26 that is shown in more detail in figure 6A. The hang-off lock 101 comprises in this example two mating locking bodies 102 that are formed with a flat steel plate to form a split flange and that together cover the entire mounting flange 26. Each locking plate 102 comprises an inner recess 103 with a constant radius that together bound a circular inner locking passage 104.

The central column 10 comprises a hoisting winch 106 that is in this example installed on the middle platform 18, a hoisting sheeve 107 above the cable connector channel 20 that is in this example suspended from the top wall 17, and a hoisting cable 108 on the hoisting winch 106 that is reeved along the hoisting sheeve 107 and hangs downward right above the center of the cable connector channel 20. The area between the top wall 17 and the middle platform 18 forms a working space in which human operators can walk to control the hoisting winch 106, install the hang-off lock 101 and connect the electric power cable 90 to the electrical installation of the floating marine platform 1 and the wind turbine 300.

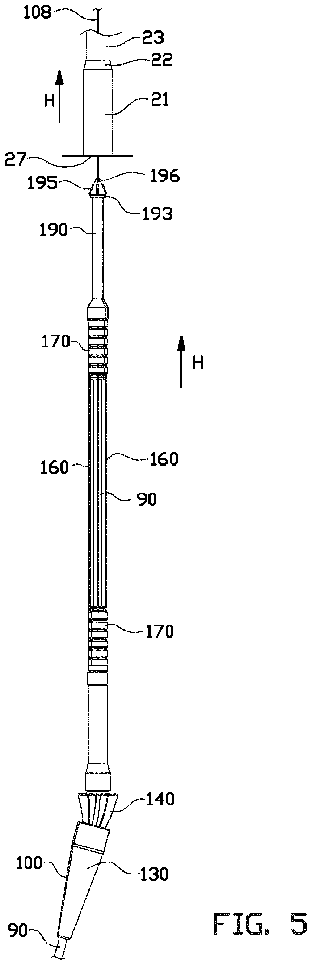

The cable connector system 100 with the electric power cable 90 that is inserted in the cable connector channel 20 is shown in more detail in figures 5 and 6A-6D. The electric power cable 90 comprises multiple bendable or flexible electrical conductors 91 that are each provided with an electrically conducting core 92 and an electrically insulating jacket 93. The electric power cable 90 comprises an armed or reinforced sheath 95 around the bundled flexible electrical conductors 91.

The cable connector system 100 comprises an insert connector 110 for insertion into the cable connector channel 20 in a hoisting direction H. The insert connector 110 comprises a rigid insert plug 111 with a circular cross section. The insert connector 110 may be made of steel. The insert plug 111 comprises in this embodiment a proximal tube 112 with a first outer diameter E1 that merges via a conical diameter reduction 113 into a longer distal tube 114 with a smaller second outer diameter E2. The insert plug 111 comprises a bottom flange 116 around the bottom side of the proximal tube 112. The insert connector 110 comprises in this embodiment a tubular distal elastic body 115 around the end of the distal tube 114, giving the insert connector 110 a local larger initial outer diameter E3 with respect to the distal tube 114, and that can be reduced by reversible radial impression. The insert connector 110 comprises in this embodiment a tubular proximal elastic body 119 around the proximal tube 112, giving the insert connector 110 a local larger initial outer diameter E4 with respect to the proximal tube 112 that can be reduced by radial impression. The insert plug 111 has an internal insert connector channel 117 along the central axis C that forms a cable passage section through which the electric power cable 90 extends.

The cable connector system 100 comprises a flexible bend stiffener 130 with a central axis D that is connected to the bottom flange 116 via a spool piece 140. The bend stiffener 130 is made of a flexible plastic or synthetic rubber, for example a flexible Polyurethane (PU). The bend stiffener 130 comprises a cylindrical section 131 that merges into a longer conical section 132. The bend stiffener 130 has an internal bend stiffener channel 133 with a central axis D that forms a cable passage section through which the electric power cable 90 extends. The spool piece 140 is made of steel and comprises a top flange 141 that is mounted to the bottom flange 116 of the insert plug 111, a bottom flange 142 that is mounted to the bend stiffener 130, a bended tube 143 that is connected to and debouches through the top flange 141 and the bottom flange 142, and multiple stiffeners 144 extending radially around the bended tube 143 and that are welded to the bended tube 143, the top flange 141 and the bottom flange 142. The spool piece 140 keeps the internal bend stiffener channel 133 under a fixed and well defined bend angle Q with respect to the internal insert connector channel 117. In this example this bend angle Q is not 180 degrees, for example 150 degrees. The cable connector channel 20 and the insert connector 110 are provided with an orientation provision that imposes an azimuth angle R between the cable 90 and the offshore marine platform 1. The orientation provision comprises in this example a guide rim 24 inside the insert tube 21 that engages a projecting notch 118 on the insert connector 110. The bend angle Q and the azimuth angle R are defined by the designed end-to-end three-dimensional track of the suspended electric power cable 90 through the seawater.

The cable connector system 100 comprises a cable hang-off 150 that is made of steel. The cable hang-off 150 comprises a bottom mounting flange 151 with multiple mounting holes 152 and a smaller top mounting flange 159 that both merge into a cylindrical fixation bush 154 having an internal passage 155 that forms a cable passage section through which the electric power cable 90 extends. The internal passage 155 is in this example conical whereby its internal diameter decreases downwardly towards the bend stiffener 130. The electric power cable 90 is fixated to the cable hang-off 150, in this example by means of a not shown wedging body that wedges between the electric power cable 90 and the internal passage 155. Alternatively a resin body is formed between the electric power cable 90 and the internal passage 155. The cable hang-off 150 comprises two rims 157 that project from the fixation bush 154 parallel and spaced apart from each other to define a radially open insert slot 158 that extends around the circumference of the fixation bush 154. The insert slot 158 has a diameter at its bottom that corresponds with the inner diameter of the locking passage 104 of the hang-off lock 101. The cable hang-off 150 forms in this example one unit but may alternatively be formed with mating parts that are mounted to each other around the electric power cable 90 to form the cable hang-off 150.

The cable connector system 100 comprises multiple flexible pulling cables or pulling ropes 160 that extend parallel to each other between the insert connector 110 and the cable hang-off 150. In this example the cable connector system 100 comprises four pulling ropes 160 that are evenly distributed around the electric power cable 90 to form a cable passage section for the electric power cable 90. In this example the pulling ropes are synthetic ropes, for example Dyneema ropes. The pulling ropes 160 are each at one end connected to the distal end of the insert connector 110, and are at the opposite end connected to the bottom mounting flange 151. In this example the ropes 160 extend through the mounting holes 152 where not shown cable clamps on the bottom mounting flange 151 engage the ropes 160.

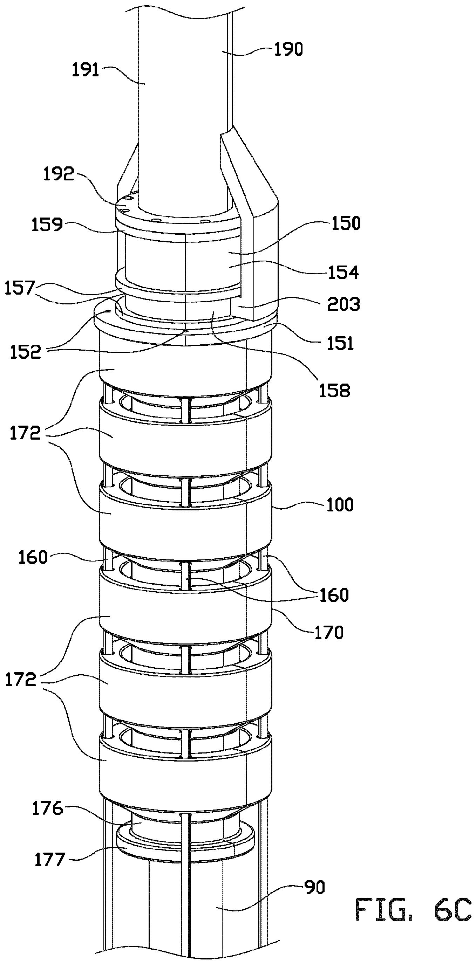

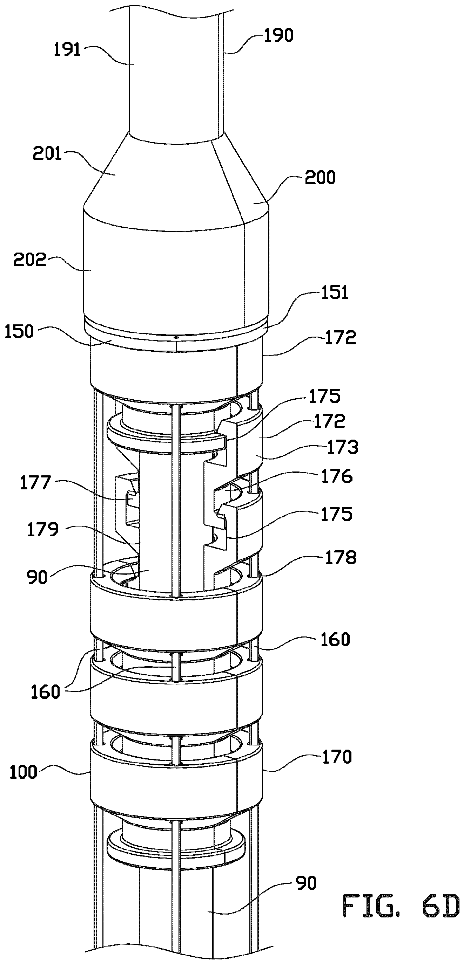

The cable connector system 100 comprises in this example two bend restrictors 170 between the insert connector 110 and the cable hang-off 150. The bend restrictors 170 are made of a rigid plastic and each comprise a series of interconnected bend restrictor links 172 that are shown in detail in figures 6C and 6D. The bend restrictor links 172 extend around the electric power cable 90 and have in this example a cylindrical outer side. The bend restrictor links 172 comprise a female part 173 with a circumferentially extending inner insert channel 175. The female part 173 merges into a male part 176 with a smaller outer diameter that merges at its distal end into a circumferentially and radially extending rim 177 that is confined in the insert channel 175 with axial play, whereby the interconnected bend restrictor links 172 can follow and limit any bend of the electric power cable 90 over the lengths of the bend restrictors 170. The bend restrictor links 172 have an inner channel 179 that forms a cable passage section for the electric power cable 90. The bend restrictor links 172 comprise pulling rope channels 178 through the female parts 173. The pulling ropes 160 extend through the pulling rope channels 178 and may be fixated therein to keep the bend restrictors 170 and the electric power cable 90 aligned. The cable connector system 100 comprises in this example one bend restrictor 170 at the cable hang-off 150 and one bend restrictor 170 at the insert connector 110. Alternatively the cable connector system 100 comprises one continuous bend restrictor 170 along the entire length between the cable hang-off 150 and the insert connector 110.

The cable connector system 100 comprises an optional steel cable protector 190 that is temporary mounted to the cable hang-off 150. The cable protector 190 comprises a protection tube 191 that forms an internal cable passage section in which the electric power cable 90 is fully enclosed at the location of the exposed electrical conductors 91, a bottom mounting flange 192 that is bolted to top mounting flange 159 of the cable hang-off 150, and a top mounting flange 193 that is mounted to a hoist coupling 195 with a distal hoisting eye 196. The cable connector system 100 comprises a steel guide 200 that is temporary mounted over the cable hang-off 150 and the cable protector 190. The guide 200 comprises a conical head 201, a cylindrical wall 202 and a inwardly directed rim 203 that extends in the insert slot 158 of the cable hang-off 150. The guide 200 consists of multiple mating parts that are connected to each other around the cable hang-off 150.

The cable connector system 100 can be used to connect the electric power cable 90 to the floating marine platform 1 at the commissioning of a new built offshore wind farm, and to temporary disconnect and reconnect the electric power cable 90 offshore fully reversible, thus without cutting off and discard some length the electric power cable 90.

During the commissioning of the floating marine platform 1, the entire cable connector system 100 is attached to the electric power cable 90, for example on shore or on an anchor handling vessel. The hoisting cable 108 is paid out and lowered through the cable connector channel 20 to be picked up under water, for example by means of an underwater remotely operated vehicle (ROV), brought on board and attached to the hoisting eye 196. The electric power cable 90 and the cable connector system 100 are pushed overboard. The hoisting cable 108 is hauled in by the winch 106 in the hoisting direction H while the electric power cable 90 is guided under water towards the cable connector channel 20. The cable protector 190 enters the cable connector channel 20 first, followed by the protected cable hang-off 150, the bend restrictors 170 and finally the insert connector 110. At a final stage of the entry of the insert connector 110 into the cable connector channel 20, the distal elastic body 115 slides along the conical diameter reduction 22 whereby it ends up in an impressed state in the riser tube 23, and the proximal elastic body 119 synchronously ends up in an impressed state in the insert tube 21 for a tight fit of the insert connector 110 in the cable connector channel 20. The bottom flange 116 may prevent that the insert plug 111 enters too deep into the cable connector channel 20, but in practice some clearance remains between the bottom flange 116 and the bottom wall 14. At this final position, the cable hang-off 150 extends through the mounting flange 26 at the middle platform, whereby the guide 200 can be removed by human operators and the hang-off lock 101 can be installed by inserting the two locking bodies 102 on the mounting flange 26 in insertion direction L into the insert slot 158 of the cable hang-off 150. The locking bodies 102 can be fixated with respect to the mounting flange 26 by means of bolts for example. After installation of the hang-off lock 101 the cable protector 190 is removed to expose the electrical conductors 91 for connection to the electrical installation of the floating marine platform 1 and the wind turbine 300.

When the electric power cable 90 needs to be disconnected from the floating marine platform 1, the electrical conductors 91 are disconnected from the electrical installation, the cable protector 190 is installed on the cable hang-off 150 and slightly hoisted upwards to remove the hang-off lock 101 and to install the guide 200, whereafter the electric power cable 90 with the cable connector system 100 is lowered to sink to the sea floor where it can be picked up later.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Cable connector system for connecting an electric power cable in a cable connector channel that debouches at a bottom of a floating marine platform, wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable.

2. Cable connector system according to claim 1, wherein the pulling ropes extend parallel to each other.

3. Cable connector system according to any one of the preceding claims, wherein the pulling ropes are evenly distributed around the cable passage section they define.

4. Cable connector system according to any one of the preceding claims, wherein the insert connector comprises an insert plug for insertion into the cable connector channel, wherein the insert connector preferably comprises a radially projecting flange with a larger radial size than an insert opening towards the cable connector channel, wherein the insert plug preferably has a distal end with a distal outer diameter, and a proximal end with a larger proximal outer diameter.

5. Cable connector system according to any one of the preceding claims, comprising a bend restrictor between the cable hang-off and the insert connector that defines a cable passage section of the internal cable passage, wherein the bend restrictor preferably comprises a series of interconnected bend restrictor links that are provided with pulling rope channels through which the pulling ropes extend, wherein the bend restrictor links preferably comprise a female part that merges into a male part and that extend in the female part of a subsequent bend restrictor link, wherein the female part preferably comprises an inner insert channel and the male part comprises a radially extending rim that is confined in the insert channel with play in the direction of the internal cable passage.

6. Cable connector system according to any one of the preceding claims, comprising a bend stiffener that is connected to the insert connector and that defines a cable passage section of the internal cable passage, wherein the cable passage section of the bend stiffener is preferably under an orientation angle with the cable passage section of the insert connector, wherein the bend stiffener is preferably connected to the insert connector via a spool piece that sets the orientation angle.

7. Cable connector system according to any one of the preceding claims, wherein the cable protector is removable mounted to the cable hang-off.

8. Cable connector system according to any one of the preceding claims, wherein the cable protector comprises a protection tube for confinement of an end of the electric power cable, and a distal hoist coupling on the protection tube for hoisting the cable connector system.

9. Cable connector system according to any one of the preceding claims, wherein the cable hang-off comprises a fixation bush that bounds a cable passage section of the internal cable passage, and a radially open insert slot for insertion of a hang-off lock.

10. Cable connector system according to any one of the preceding claims, comprising a guide that is removable mounted around the connection between of the cable hang-off and the cable protector.

11. Set comprising a floating marine platform and a cable connector system according to any one of the preceding claims, wherein the floating marine platform comprises at least one column that comprises a circumferential wall, a bottom wall and a cable connector channel that extends through the column and that debouches through the bottom wall, wherein the cable connector system has an installed state in which the insert connector is inserted in the cable connector channel and is suspended from the cable hang-off via the pulling cables that extend through the cable connector channel, and an unconnected state in which the cable connector system is outside the cable connector channel.

12. Set according to claim 11, wherein the insert connector comprises an insert plug for insertion into the cable connector channel, and a distal elastic body and a proximal elastic body that extend spaced apart from each other around the insert plug, wherein in the installed state the distal elastic body and the proximal elastic body are impressed and in contact with an inner surface of the cable connector channel.

13. Set according to claim 11 or 12, wherein the floating marine platform comprises a central column, multiple peripheral columns circumferentially around the central column, radially extending outriggers that connect the peripheral columns with the central column, and tendons spanning between each adjacent pair of peripheral columns.

14. Method for connecting an electric power cable to a floating marine platform by means of a cable connector system, wherein the floating marine platform comprises a cable connector channel that debouches at the bottom of the floating marine platform, and wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable, wherein the method comprises the step of inserting the electric power cable in the internal cable passage and fixating the inserted electric power cable with respect to the cable hang-off, the step of hoisting the cable connector system into the cable connector channel from below the bottom of the floating marine platform by means of a hoisting cable on the cable protector that extends through the cable connector channel, wherein the insert connector remains suspended on the pulling ropes after the insert connector has reached its final inserted position.

15. Method for disconnecting an electric power cable on a floating marine platform by means of a cable connector system, wherein the floating marine platform comprises a cable connector channel that debouches at the bottom of the floating marine platform, and wherein the cable connector system comprises an insert connector for insertion into the cable connector channel, a cable hang-off to be fixated to the electric power cable, multiple pulling ropes that extend aside each other between the insert connector and the cable hang-off, and a cable protector on the cable hang-off, wherein the insert connector, the pulling ropes, the cable hang-off and the cable protector define subsequent cable passage sections of an internal cable passage for the electric power cable, wherein the method comprises the step of placing the cable protector on the cable hang-off, and the step of lowering the cable connector system out off the cable connector channel by means of a hoisting cable on the cable protector that extends through the cable connector channel.
